# EUROPEAN PATENT APPLICATION

(11) **EP 1 662 370 A2**
(43) Date of publication of application: **31.05.2006**
(21) Application number: 05111085.6
(22) Date of filing: 22.11.2005
(51) Int. Cl.: G06F 3/12

(54) **Image forming apparatus and method for providing a file list**

(30) Priority: 29.11.2004 KR 2004098440
(71) Applicant: Samsung Electronics Co., Ltd., Suwon-si, Gyeonggi-Do (KR)
(72) Inventor: Park, Hyun-cheol, Gyeonggi-do (KR)
(74) Representative: Derry, Paul Stefan

(57) **Abstract**

An image forming apparatus and a method for providing a file list using the same. The image forming apparatus comprises a user interface for inputting an address of a File Transfer Protocol (FTP) server, a network interface for accessing the FTP server corresponding to the input address of the FTP server and receiving file information, a list generator for generating a file list based on the receiving file information, and a print part for generating an image of the generated file list and outputting the image. Accordingly, the image forming apparatus provides a user with file information provided from the FTP server.

## Description

The present invention relates to an image forming apparatus which generates a file list having a tree structure based on file information provided from a File Transfer Protocol (FTP) server and provides the same to a user and a method for providing the file list using the same.

Conventional image forming apparatuses such as printers, facsimile machines, and photocopiers perform a specific function such as printing, faxing and copying, respectively. Recently, however, a multi-function printer, which implements various functions such as printing, faxing, and photocopying through an integrated single device, has become popular.

Also, a recent image forming apparatus additionally includes a communication module so that it can directly access a network without using a computer. The image forming apparatus having such a communication module is able to access various servers through the communication module. One of the servers accessible through the communication module is a File Transfer Protocol (FTP) server.

The FTP server stores a plurality of files and transfers files for a user who accesses the server using his/her individual account or an anonymous FTP. Since the FTP server has a great number of files, the user requires a file list to easily comprehend the files.

Generally, in order to see the file list from the FTP server, a user uses a computer and accesses the FTP server. On the other hand, if a user uses the image forming apparatus including the communication module as described above, the user can directly access the FTP server through the image forming apparatus without using the computer.

For example, when a user logs onto the FTP server through a communication terminal device, the communication terminal device obtains information about files (or directories) from the FTP server, determines whether the file is printable and displayable, and prints and displays the file if the file is printable and displayable.

The conventional image forming apparatus having the function of accessing an FTP server as described above is advantageous in that it can automatically obtain the file information. However, the conventional image forming apparatus is disadvantageous in that it provides information only about high-level directories which files belong to. Therefore, when a user wants to see information about lower-level subdirectories belonging to the high-level directories, the user has to input an extra command to obtain the information about the lower-level subdirectories, which causes an inconvenience.

Therefore, a need exists for accessing lower-level subdirectories without requiring additional commands.

An aim of the present invention is to provide an image forming apparatus which outputs a list about all of the files provided from a File Transfer Protocol (FTP) server so that a user can easily check the list, and a method of providing a file list.

An aspect of the invention provides an image forming apparatus comprising a user interface for inputting an address of a FTP server and a user account, a network interface for accessing the FTP server corresponding to the input address of the FTP server and receiving file information, a list generator for generating a file list based on the received file information, and a print part for generating an image of the generated file list and outputting the image.

The file list generated by the list generator may have a tree structure.

The list generator may generate the file list, displaying an accessibility to a corresponding file with respect to the user account input from the user interface.

The user interface may provide a function of selecting which file to output according to an accessibility with respect to the user account. The list generator generates a file list that consists of the selected files.

The image forming apparatus may further comprise a display part for displaying the file list generated by the list generator.

The above aspect is also achieved by providing a method for providing a file list using an image forming apparatus. The method comprises inputting an address of an FTP server and a user account, accessing the FTP server corresponding to the input address of the FTP server and receiving file information from the FTP server, generating a file list based on the received file information, and generating an image of the generated file list and outputting the image.

The file list generated at the step of generating the file list may have a tree structure. At the step of generating the file list, the file list may be generated to display an accessibility to a corresponding file with respect to the input user account.

The method may further comprise selecting which file to output according to the accessibility with respect to the user account. If the file to output is selected according to the accessibility, a list of the selected file is generated.

The method may further comprise displaying the generated file list.

The invention will now be described by way of example only with reference to the accompanying drawings, in which:
Figure 1 is a view showing a network system for providing a file list according to an embodiment of the present invention;
Figure 2 is a block diagram showing an embodiment of image forming apparatus according to the invention;
Figure 3 is a view showing one example of a file list provided by the image forming apparatus of Figure 2; and
Figure 4 is a flowchart showing an embodiment of a method of providing a file list using an image forming apparatus according to the invention.

In the drawings, it should be understood that like reference numerals refer to like features and structures. The same or similar elements, features and structures are represented by the same reference numerals.

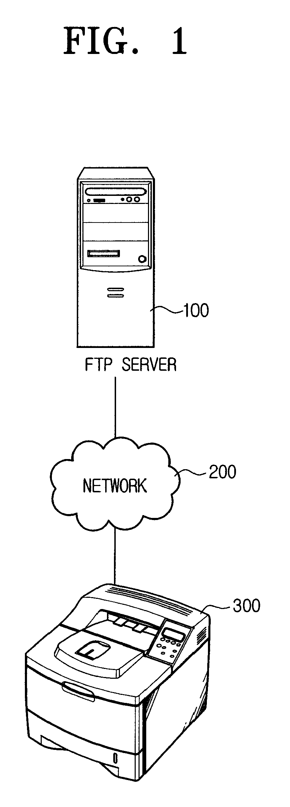

Figure 1 is a view showing a network system for providing a file list.

Referring to Figure 1, a system for providing a file list comprises a File Transfer Protocol (FTP) server 100, an image forming apparatus 300, and a network 200 connecting the FTP server 100 and the image forming apparatus 300.

The FTP server 100 has a plurality of files and provides information about the files on receipt of a request from the image forming apparatus 300. The files in the FTP server 100 may be divided into categories and exist in directories (a tree structure) for the convenience of file management or organisation. The file described comprises an exemplary general file and a directory.

Also, the plurality of files provided from the FTP server 100 are divided into accessible files and non-accessible files according to user accounts. Files accessible by an anonymous user are typically limited compared to files accessible by a user having an authorised individual account. Even if a user has an authorised individual account, the user may have different ranges of accessible files according to the type of account.

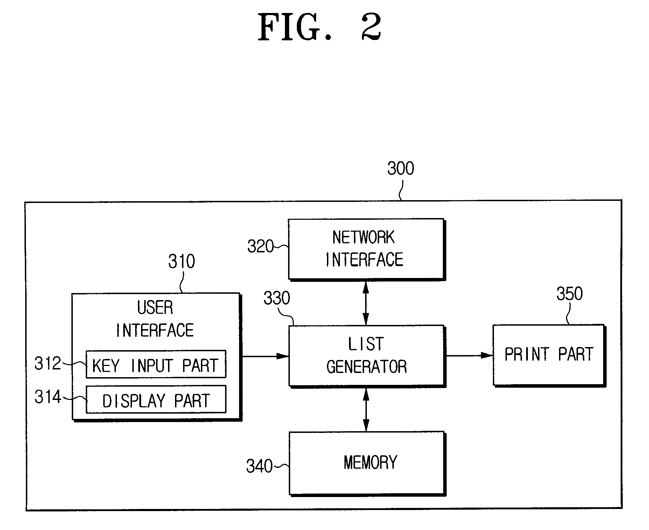

The image forming apparatus 300 accesses the FTP server 100 through the network 200 to request file information, and generates a file list in a displayable form based on the file information provided from the FTP server 100 and displays it to the user. Functions of the image forming apparatus 300 will be described below in greater detail with reference to Figure 2.

Figure 2 is a block diagram showing the image forming apparatus 300 according to an embodiment of the present invention.

Referring to Figure 2, the image forming apparatus 300 comprises a user interface 310, a network interface 320, a list generator 330, a memory 340 and a print part 350.

The user interface 310 provides input and output interfaces between a user and the image forming apparatus 300. The user interface 310 comprises a key input part 312 and a display part 314. An address of the FTP server 100 and a user account from the user is input through the user interface 310 and provided to the list generator 330

The key input part 312 has a plurality of function keys so that a user can input the addresses of the FTP server 100 and the user account information, such as a ID, user name or user ID and password, to log onto the FTP server 100. The key input part 312 is typically disposed on a front panel of the image forming apparatus 300. However, the key input part can instead be disposed on the top or sides of the image forming apparatus 300 .

The display part 314 displays various functions under the control of a central processing unit (CPU) (not shown) of the image forming apparatus 300. The display part 314 displays contents that a user currently inputs through the key input part to help the user input information accurately. Also, the display part 314 selectively displays a file list provided from the list generator 330.

The network interface 320 accesses the FTP server 100 corresponding to the address of the FTP server 100 through the network 200. The network interface 320 transmits to the FTP server 100 the user account input from the user interface 310 to request a user's authorisation to gain access. Also, the network interface 320 receives file information from the FTP server 100 through the network 200 and provides it to the list generator 330.

The list generator 330 requests the file information from the FTP server 100 through the network interface 320 when it receives the address of the FTP server 100 and the user account though the user interface 310.

The list generator 330 receives the file information transmitted from the FTP server 100 through the network interface 320, and generates the file list based on the received file information.

The file list generated by the list generator 330 typically has an hierarchical tree structure. Such a tree structure is suitable for expressing the hierarchical relationship of data and improves search efficiency, thereby allowing a user to easily comprehend the file information.

The file list generated by the list generator 330 comprises file information transmitted from the FTP server 100. However, the file list may instead selectively include file information according to accessibility with respect to a user account.

The file list generated by the list generator 330 is output to the print part 350. The list generator 330 provides the file list to not only the print part 350 but also the display part 314 so that the display part 314 can display the file list.

The memory 340 preferably comprises a non-volatile memory for storing various control programs necessary for the operation of the image forming apparatus 300 and a volatile memory for temporarily storing data generated during processing operations of the CPU and programs in the list generator 330. The memory 340 temporarily stores the file list generated by the list generator 330.

The print part 350 converts the file list generated by the list generator 330 into a printable image, and outputs the printable image on a predetermined printing medium.

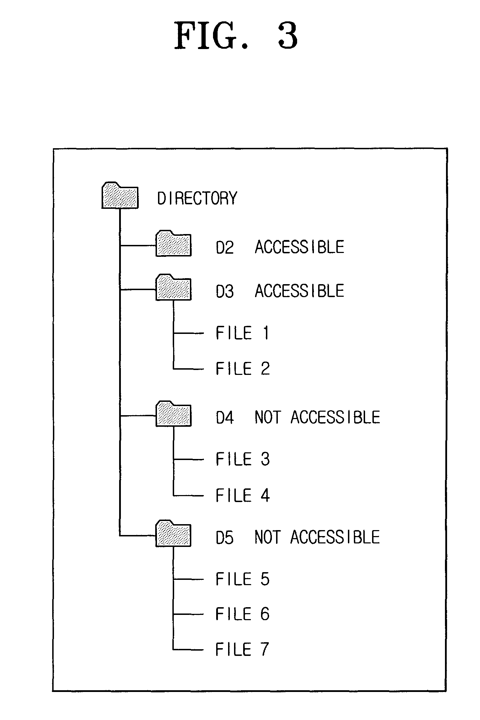

Figure 3 is a view showing one example of the file list provided by the image forming apparatus of Figure 2.

Specifically, Figure 3 illustrates an exemplary file list which is generated by the list generator 330 based on the file information transmitted from the FTP server 100 through the network interface 320 and output by the print part 350 in a printable image.

As shown in Figure 3, since the file list has a tree structure, a user can easily view file names and directory names and thus easily grasp their hierarchical relationship.

The display of each file or directory preferably includes the accessibility with respect to the user account on a side thereof. For example, each file or directory is divided into "Accessible" files or "Non-Accessible" files.

In the exemplary embodiment, a current logged-on user has accessibility to directories D2 and D3 and files File1 and File2 belonging to the directory D3 with respect to his/her account.

The current logged-on user does not have accessibility to directories D4 and D5, and files File3 and File4 belonging to the directory D4 and files File 5, File 6 and File 7 belonging to the directory D5.

Although in this embodiment the accessibility is displayed with respect to the directory, the accessibility can also be displayed with respect to files.

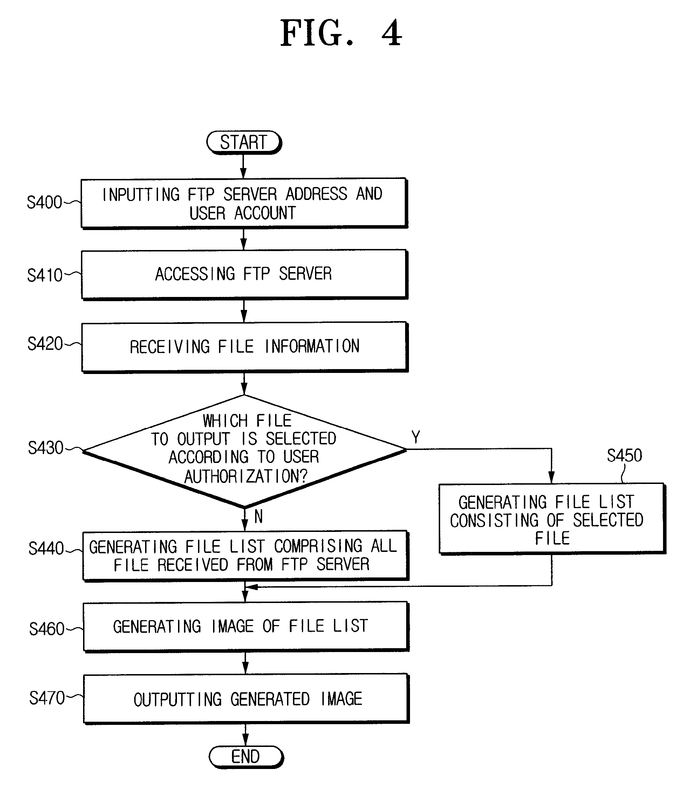

Figure 4 illustrates a method for providing a file list using the image forming apparatus according to the present invention. With reference to Figures 1 to 4, the method for displaying the file list using the image forming apparatus will now be described.

A user inputs an address of the FTP server 100 the user wants to access by manipulating the key input part 312 and also inputs user account information to log-on to the FTP server 100. Subsequently, the user interface 310 inputs the address of the FTP server 100 and the user account to the list generator 330 at step S400.

The list generator 330 controls the network interface 320 to access the FTP server 100 through the network 200 and request the FTP server 100 for file information at step S410.

On receipt of request for the file information, the FTP server 100 authenticates the user account transmitted from the network interface 320 and transmits the file information. The network interface 320 receives the file information from the FTP server 100 and transmits the file information to the list generator 330 at step S420.

Since a user is allowed to select which file to output according to user authorisation, the list generator 330 determines whether the selected file is accessed according to user's authorisation at the user interface 310 at step S430.

If which file to output is not selected or if it is determined that all of the file information is output at the step S430, the list generator 330 generates a file list based on all file information received from the FTP server 100 at step S440.

If which file to output is selected according to user authorisation at step of S430, the list generator 330 generates a file list that consists of selected files at step S450. For example, if a user wants to output only accessible files such as authorised files, the list generator 330 generates a file list that comprises only the accessible files. On the other hand, if a user wants to output only non-accessible files, the list generator 330 generates a file list that consists of the non-accessible files.

Next, the list generator 330 transmits the generated file list to the print part 350, and the print part 350 generates an image of the file list in a printable form at step S460 and outputs the image of the file list to a printing medium at step S470.

As described above, since the image forming apparatus and the method for providing the file list using the same provides a user with the file list having the tree structure, which is generated based on the file information provided from the FTP server, the user can easily search the files provided by the FTP server without using a computer.

Since the provided file list displays the accessibility of files, the user easily knows which files are accessible and which are non-accessible, and thus it advantageously takes less time to search the files.

The foregoing is merely exemplary and not limiting. Many alternatives, modifications, and variations will be apparent to those skilled in the art.

## Claims

1. An image forming apparatus comprising:
a user interface for allowing input of an address of a server;
a network interface for accessing the server corresponding to the input address of the server and for receiving file information therefrom;
means for producing a file list based on the received file information; and
means for printing an image of the generated file list.

2. The image forming apparatus as claimed in claim 1, wherein the file list has a hierarchical or tree structure.

3. The image forming apparatus as claimed in claim 1 or claim 2, wherein the file list includes file accessibility information dependent on accessibility determined from information received via the user interface.

4. The image forming apparatus as claimed in claim 3, wherein the inclusion in the list of files having associated therewith negative accessibility information is user-selectable.

5. The image forming apparatus as claimed in claim 1, further comprising means for displaying the file list.

6. The image forming apparatus as claimed in any preceding claim, wherein the server is a File Transfer Protocol server.

7. A method for providing a file list using an image forming apparatus, the method comprising:
receiving an input address;
accessing a server corresponding to the input address of the server;
receiving file information from the server;
generating a file list based on the received file information; and
providing an image of the generated file list.

8. The method as claimed in claim 7, wherein the file list has a hierarchical or tree structure.

9. The method as claimed in claim 7 or claim 8, wherein the step of generating a file list comprises: generating accessibility information in dependence on received user account information.

10. The method as claimed in claim 7, inclusion in the list of files having associated therewith negative accessibility information is user-selectable..

11. The method as claimed in any of claims 7 to 10, further comprising displaying the generated file list.
